# EUROPEAN PATENT SPECIFICATION

(11) **EP 4 236 017 B1**
(45) Date of publication and mention of the grant of the patent: **05.08.2026**
(21) Application number: 23158606.6
(22) Date of filing: 24.02.2023
(51) Int. Cl.: H02J 7/56, H02J 7/80

(54) **BATTERY ELECTRICAL ENERGY BALANCING CIRCUIT AND METHOD AND ENERGY STORAGE SYSTEM**
BATTERIESTROMAUSGLEICHSSCHALTUNG UND -VERFAHREN UND ENERGIESPEICHERSYSTEM
CIRCUIT ET PROCÉDÉ D'ÉQUILIBRAGE D'ÉNERGIE ÉLECTRIQUE DE BATTERIE ET SYSTÈME DE STOCKAGE D'ÉNERGIE

(30) Priority: 25.02.2022 CN 202210178430
(43) Date of publication of application: 30.08.2023
(73) Proprietor: Huawei Digital Power Technologies Co., Ltd., Shenzhen, 518043 (CN)
(72) Inventor: ZHANG, Shuang, Shenzhen, 518043 (CN); JIANG, Hongxu, Shenzhen, 518043 (CN); FAN, Xianyan, Shenzhen, 518043 (CN)
(74) Representative: Gill Jennings & Every LLP

(56) References cited:
- EP-B1- 3 691 075
- CN-A- 107 658 936
- CN-A- 114 530 910
- KR-B1- 101 294 378
- US-A1- 2012 086 390

## Description

### TECHNICAL FIELD

This application relates to the field of battery technologies, and in particular, to a battery electrical energy balancing circuit and method and an energy storage system.

### BACKGROUND

With the widespread application of lithium battery energy storage systems, requirements for electrochemical cell balancing are becoming higher. Current electrochemical cell balancing methods have been gradually changed from previous passive balancing to active balancing. Moreover, during electrochemical cell balancing, requirements for energy utilization efficiency are becoming higher.

In a passive balancing solution, when a voltage is higher, a resistor is connected in series with an electrochemical cell with a higher voltage, and energy of the electrochemical cell is consumed by a resistor to achieve voltage balancing of the electrochemical cell. In an active balancing solution, energy is transferred from a higher-voltage electrochemical cell to a lower-voltage electrochemical cell. Compared with active balancing, a passive balancing circuit has a simple structure and low costs, and is easy to implement. However, disadvantages of the passive balancing are also obvious: The use of the resistor consumes energy, resulting in low energy utilization. Active balancing can transfer energy to avoid ineffective consumption of energy, but it is more complex to achieve active balancing, with more components used and higher costs consumed. Current active balancing solutions include capacitive energy transfer, inductive energy transfer, and transformer isolation. In the capacitive energy transfer, a capacitor is used as an energy storage element, which can absorb energy of a high-voltage battery and transfer it to a low-voltage battery. In the inductive energy transfer, an inductor is used as an energy storage element, which can transfer energy from a high-voltage electrochemical cell to a low-voltage electrochemical cell. The transformer isolation uses an isolation transformer to achieve bidirectional conversion of energy. When a voltage of an electrochemical cell is low, energy is supplied from a busbar to the electrochemical cell with a low voltage through a transformer. When a voltage of an electrochemical cell is high, energy flows from the electrochemical cell to the busbar through the transformer.

The foregoing electrochemical cell active balancing topology circuits are all incompatible with an electrochemical cell sampling function, and an overall circuit structure of a battery management system (Battery Management System, BMS) is complex. In addition, in an existing solution, energy is fed back directly to a battery. When the electrochemical cell is fully charged, the transformer still stores energy, causing a problem of continuous charging of the battery. In view of this, a novel balancing circuit topology structure needs to be proposed, to reduce circuit complexity and costs while achieving efficient energy utilization.

CN 107 658 936 A relates to a battery monitoring and equalization system comprising a multi-cell battery and a control method thereof. US 2012/086390 A1 discloses a charge equalization apparatus and method for a battery string connected in series. EP 3 691 075 B1 relates to a battery regulation device and a battery automatic balancing system which are applied to a power system. KR 101 294 378 B1 discloses a battery balancing control apparatus and method thereof.

### SUMMARY

This application provides a battery electrical energy balancing circuit and method and an energy storage system, to reduce circuit complexity and costs while achieving efficient energy utilization. The invention is defined by the appended claims. Embodiments not falling within the scope of the claims are for illustration only.

According to a first aspect, this application provides a battery electrical energy balancing circuit, applied to a series battery pack including N batteries connected in series. The circuit includes a controller, N battery control switches, a filter capacitor control unit, a balancing unit, and a sampling unit. Each battery in the N batteries is connected to a first end of each battery control switch in the N battery control switches in a one-to-one correspondence, and a second end of each battery control switch in the N battery control switches is connected to the filter capacitor control unit. The filter capacitor control unit is connected to the balancing unit and the sampling unit. The balancing unit is connected to a power supply, and the power supply is configured to supply power to the balancing unit. The balancing unit is configured to charge/discharge a target battery, where the target battery is any battery of the N batteries. The sampling unit is configured to detect a voltage of the target battery. The filter capacitor control unit is configured to filter a current input by the balancing unit to the target battery. The controller is configured to control a battery control switch connected to the target battery to be closed, to obtain a voltage value of the target battery detected by the sampling unit; or control the balancing unit to charge/discharge the target battery.

The sampling unit and the balancing unit in the battery electrical energy balancing circuit in this application reuse N battery control switches, to not only achieve an active balancing function but also achieve a battery sampling function, which do not affect each other, thereby reducing complexity of a BMS used in a conventional solution. In addition, the power supply in this application is not directly connected to the battery, but instead, is charged indirectly through a transformer of the balancing unit, so that energy is fed back through an indirect feedback method, thereby resolving a problem of continuous charging when the battery is fully charged.

In a possible implementation, the battery electrical energy balancing circuit further includes a first busbar and a second busbar, and the N batteries include a plurality of first batteries and a plurality of second batteries. The balancing unit includes a primary-side winding, a first secondary-side winding, a second secondary-side winding, and a first control switch. The sampling unit includes an analog to digital converter ADC and a sampling circuit. A second end of a battery control switch connected to the first battery is connected to the first busbar, and a second end of a battery control switch connected to the second battery is connected to the second busbar. The first busbar is connected to a first end of the filter capacitor control unit, and the second busbar is connected to a second end of the filter capacitor control unit. The first busbar is connected to the first secondary-side winding, and the second busbar is connected to the second secondary-side winding. The primary-side winding is connected to the power supply, and the primary-side winding is grounded through the first control switch. The first busbar is connected to a first input end of the sampling circuit, the second busbar is connected to a second input end of the sampling circuit, an output end of the sampling circuit is connected to the ADC, and an output end of the ADC is connected to the controller.

The battery electrical energy balancing circuit in this application uses design of a single primary-side winding and double secondary-side windings. There are a plurality of switches for control between the battery control switches and the windings of the balancing unit, and only two switches are high-frequency switches for driving, thereby reducing a quantity of high-frequency switches for driving, so that a driving circuit in the controller is easier to implement and costs of high-frequency driving are reduced. Moreover, the battery control switch in this application uses a paired MOS structure, to achieve bidirectional conduction. In addition, the controllable filter capacitor is introduced, so that the voltage sampling circuit and the balancing unit reuse the N battery control switches with a better effect. This not only achieves the active balancing function but also achieves the battery sampling function, thereby reducing complexity of a BMS used in a conventional solution.

In a possible implementation, the filter capacitor control unit specifically includes a filter capacitor and a second control switch, the second control switch and the filter capacitor are connected in series. The controller is specifically configured to control the battery control switch connected to the target battery to be closed and control the second control switch to be open, to obtain the voltage value of the target battery detected by the sampling unit; or control the battery control switch connected to the target battery to be closed and control the second control switch to be closed, to control the balancing unit to charge/discharge the target battery.

In a possible implementation, the controller is specifically configured to: when it is detected that a voltage difference between a first target battery and a second target battery is greater than a specified voltage threshold, where the first target battery and the second target battery are any two batteries in the series battery pack including the N batteries connected in series, and a voltage value of the first target battery is less than a voltage value of the second target battery, control a battery control switch connected to the first target battery to be closed, to charge the first target battery by using the balancing unit; and control a battery control switch connected to the second target battery to be closed, to discharge the second target battery by using the balancing unit. The controller may determine voltages of the batteries, and if it is determined that a difference between voltage of a battery and a voltage of another battery is greater than the specified voltage threshold, it is determined that undervoltage or overvoltage occurs in the battery. If undervoltage occurs in the battery, the balancing unit charges the battery; or if overvoltage occurs in the battery, the balancing unit charges the battery.

In a possible implementation, the battery electrical energy balancing circuit may further include a current detection circuit and a temperature detection circuit, the current detection circuit is configured to detect a current value of each battery in the N batteries, and the temperature detection circuit is configured to detect a temperature value of each battery in the N batteries.

In a possible implementation, the balancing unit further includes a first power tube, a second power tube, a third power tube, and a fourth power tube. A first end of the first power tube is connected to a dotted terminal of the first secondary-side winding, a second end of the first power tube is connected to the first busbar, a first end of the second power tube is connected to an undotted terminal of the first secondary-side winding, and a second end of the second power tube is connected to the second busbar. A first end of the third power tube is connected to an undotted terminal of the second secondary-side winding, a second end of the third power tube is connected to the first busbar, a first end of the fourth power tube is connected to a dotted terminal of the second secondary-side winding, and a second end of the fourth power tube is connected to the second busbar. The power supply is connected to a dotted terminal of the primary-side winding, and an undotted terminal of the primary-side winding is grounded through the first control switch. Specifically, in the foregoing embodiment, the transformer in the balancing unit uses design of a single primary-side winding and double secondary-side windings. There are four switches for control between a busbar switch network bus and windings of the transformer, where two switches are low-frequency signal switches for driving, and two switches are high-frequency signal switches for driving, thereby reducing a quantity of high-frequency switches for driving, so that a driving circuit in the controller is easy to implement and costs of high-frequency driving are reduced.

In a possible implementation, the controller is specifically configured to: during charging of the battery, if a voltage of the first busbar is greater than a voltage of the second busbar, control the first power tube and the second power tube to be open and the third power tube to be closed, set the fourth power tube to a rectification state, and control the first control switch to be open, to release electrical energy stored in excitation inductance of the primary-side winding to the battery through the second secondary-side winding. A battery control switch in the N battery control switches that corresponds to a battery voltage is selected and is closed. When the battery voltage is relatively low, the battery is charged through a flyback converter by using the power supply or prestored electrical energy, to achieve charging balancing of the low-voltage battery. Electrical energy stored in the exciting inductance is released to the low-voltage battery through the second secondary-side winding.

In a possible implementation, the controller is specifically configured to: during charging of the battery, if a voltage of the first busbar is less than a voltage of the second busbar, control the third power tube and the fourth power tube to be open and the second power tube to be closed, set the first power tube to a rectification state, and control the first control switch to be open, to release electrical energy stored in excitation inductance of the primary-side winding to the battery through the first secondary-side winding.

In a possible implementation, the controller is specifically configured to: during discharging of the battery, if a voltage of the first busbar is greater than a voltage of the second busbar, control the third power tube and the fourth power tube to be open and the second power tube to be closed, set the first power tube to a rectification state, and control the first control switch to be closed, to store electrical energy in excitation inductance of the primary-side winding. A battery control switch in the N battery control switches that corresponds to a battery voltage is selected and is closed. When the battery voltage is relatively high, electrical energy of the high-voltage battery is released through a flyback converter, to achieve charging balancing of the high-voltage battery. Electrical energy stored in the exciting inductance is released to the low-voltage battery through the second secondary-side winding.

In a possible implementation, the controller is specifically configured to: during discharging of the battery, if a voltage of the first busbar is less than a voltage of the second busbar, control the first power tube and the second power tube to be open and the third power tube to be closed, set the first control switch to a rectification state, and control the fourth power tube to be closed, to store electrical energy in excitation inductance of the primary-side winding.

In a possible implementation, each battery control switch in the N battery control switches is a paired MOS transistor, and the paired MOS transistor includes a first switch tube and a second switch tube. A source of the first switch tube is connected to a source of the second switch tube, gates of the first switch tube and the second switch tube are connected to the controller, a drain of the first switch tube is connected to the battery, and a drain of the second switch tube is connected to the corresponding first busbar and second busbar. The battery control switch in this application uses a paired MOS structure, to achieve bidirectional conduction.

According to a second aspect, this application provides a battery electrical energy balancing method. The method includes: controlling a battery control switch connected to a target battery to be closed, to obtain a voltage value of the target battery detected by a sampling unit; or controlling a balancing unit to charge/discharge the target battery.

In a possible implementation, the method further includes: controlling the battery control switch connected to the target battery to be closed and controlling a second control switch to be open, to obtain the voltage value of the target battery detected by the sampling unit; or controlling the battery control switch connected to the target battery to be closed and controlling a second control switch to be closed, to control the balancing unit to charge/discharge the target battery.

In a possible implementation, balancing needs to be performed on each battery in N batteries, the controlling the second control switch to be closed and controlling closed/open states of N battery control switches to charge/discharge each battery in the N batteries by using the balancing unit includes: when it is detected that a voltage difference between a first target battery and a second target battery is greater than a specified voltage threshold, where the first target battery and the second target battery are any two batteries in the series battery pack including the N batteries connected in series, and a voltage value of the first target battery is less than a voltage value of the second target battery, control a battery control switch connected to the first target battery to be closed, to charge the first target battery by using the balancing unit; and control a battery control switch connected to the second target battery to be closed, to discharge the second target battery by using the balancing unit.

According to a third aspect, this application provides an energy storage system, including: at least one energy storage unit and at least one conversion unit in a one-to-one correspondence with the at least one energy storage unit. Each conversion unit in the at least one conversion unit is connected to a power grid, and each energy storage unit in the at least one energy storage unit includes a series battery pack including N batteries connected in series and the battery electrical energy balancing circuit in the first aspect. Each energy storage unit in the at least one energy storage unit is configured to: output a direct current to a corresponding conversion unit, or receive a direct current input by a corresponding conversion unit and charge the series battery pack including the N batteries connected in series. Each conversion unit in the at least one conversion unit is configured to: convert a direct current input by a corresponding energy storage unit into an alternating current and output it to the power grid; or receive an alternating current input by the power grid, convert the alternating current a direct current, and output it to a corresponding energy storage unit.

These aspects or other aspects of this application are clearer and more comprehensible in descriptions of the following embodiments.

### BRIEF DESCRIPTION OF DRAWINGS

FIG. 1 is a schematic diagram of a structure of an energy storage system;
FIG. 2 is a schematic diagram 1 of a structure of a battery electrical energy balancing circuit;
FIG. 3 is a schematic diagram 2 of a structure of a battery electrical energy balancing circuit;
FIG. 4 is a schematic diagram of a structure of a sampling circuit;
FIG. 5 is a schematic diagram of a structure of a paired MOS transistor; and
FIG. 6 is a schematic diagram of a structure of a balancing unit.

### DESCRIPTION OF EMBODIMENTS

To make objectives, technical solutions, and advantages of this application clearer, the following further describes this application in detail with reference to the accompanying drawings. However, example embodiments may be implemented in a plurality of forms and should not be construed as being limited to embodiments described herein, but instead, these embodiments are provided to make this application thorough and complete, and to fully convey the concept of the example embodiments to persons skilled in the art. A same reference sign denotes a same or similar structure in the drawings, and therefore repeated descriptions thereof are omitted. The words expressing a position and a direction described in this application are all described by using the accompanying drawings as an example, but changes may also be made as required, and all the changes fall within the protection scope of this application. The accompanying drawings in this application are merely used to illustrate relative positional relationships and do not represent a real scale.

To make objectives, technical solutions, and advantages of this application clearer, the following further describes this application in detail with reference to the accompanying drawings. A specific operation method in a method embodiment may also be applied to an apparatus embodiment or a system embodiment. It should be noted that, in the description of this application, "at least one" means one or more, and "a plurality of" means two or more. In view of this, in embodiments of the present invention. "a plurality of" may also be understood as "at least two". In addition, it should be understood that in description of this application, terms such as "first" and "second" are merely used for distinguishing and description, but should not be understood as indicating or implying relative importance, or should not be understood as indicating or implying a sequence.

It should be noted that "connection" in the embodiments of this application means an electrical connection, and a connection of two electrical components may be a direct or indirect connection between two electrical components. For example, a connection between A and B may be either a direct connection between A and B, or an indirect connection between A and B through one or more other electrical components. For example, the connection between A and B may be that A and C are directly connected, C and B are directly connected, and A and B are connected through C.

It should be noted that "dotted terminal" and "undotted terminal" in this application are used to determine a phase relationship of an internal electromotive force between a primary-side winding and a secondary-side winding in a transformer when the transformer is operating. Under the action of a same magnetic flux, in two (or more than two) windings at any time, terminals with a same potential polarity are "dotted terminals" with respect to each other. Under the action of a same magnetic flux, in two (or more than two) windings at any time, terminals with opposite potential polarities are "undotted terminals" with respect to each other.

In an energy storage system, even if initial performance parameters of batteries connected in series are exactly the same, there will inevitably be performance differences between the batteries over a subsequent long term process, and it is difficult to achieve balancing between the batteries. A balancing circuit includes a gating switch and a bidirectional flyback converter including a plurality of power tubes. When a voltage of a specific battery is excessively low, energy of a battery in the energy storage system or an external power supply may be transferred to the low-voltage battery by using a transformer. When a voltage of a specific battery is too high, energy of the high-voltage battery may be transferred to the battery in the energy storage system by using a transformer.

The foregoing structure is incompatible with a sampling function, and an overall circuit structure of a BMS used for sampling is complex. In addition, in an existing solution, energy is fed back directly to a battery. When the battery is fully charged, the transformer still stores energy, causing a problem of continuous charging of the battery. In addition, a plurality of power tubes need to be driven by high-frequency signals. Therefore, a circuit for driving is also relatively complex, and a plurality of driving circuits need to be powered separately, causing relatively high circuit complexity and relatively high costs.

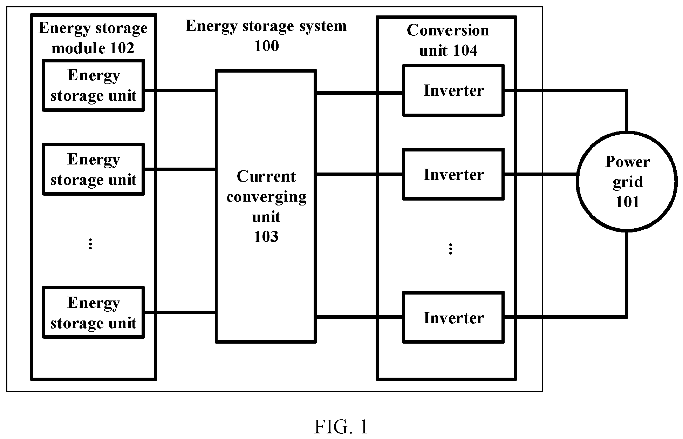

In view of this, this application provides a battery electrical energy balancing circuit to reduce circuit complexity and costs while achieving efficient energy utilization. To help understand embodiments of this application, the following describes an application scenario of this application with reference to FIG. 1. FIG. 1 is a schematic diagram of a structure of an application scenario suitable for an embodiment of this application. As shown in FIG. 1, an energy storage system 100 may be configured to store electrical energy. The energy storage system 100 may be charged by a power grid 101 or an external direct current source or an external alternating current source (not shown in FIG. 1). The energy storage system 100 may also generate an alternating current and provide the generated alternating current to the power grid 101 for power supply. The energy storage system 100 may include an energy storage module 102, a current converging unit 103, and a conversion unit 104. The energy storage module 102 may include a plurality of energy storage units, and the conversion unit 104 may include a plurality of inverters. The energy storage module 102 is configured to store energy, and output a current to the current converging unit 103 or receive a current from the current converging unit 103. The current converging unit 103 is configured to integrate a current provided by the energy storage module 102 or a current provided by the power grid 101. The conversion unit 104 is configured to convert a direct current provided by the energy storage module 102 into an alternating current, and input it to the power grid 101, or convert an alternating current provided by the power grid 101 into a direct current to charge the energy storage module 102. The energy storage system 100 in FIG. 1 is merely intended to describe the application scenario of this embodiment of this application but is not intended to limit this application. In addition, it should be understood that a connection relationship of a circuit is not limited in this embodiment of this application. In actual application, another device may be connected between components in FIG. 1. An output end of the conversion unit 104 may be connected directly to the power grid, or connected to the power grid through a transformer, which is not limited in this application. Each energy storage unit of the energy storage system 100 may include a battery electrical energy balancing circuit provided in this application. It should be noted that the conversion unit 104 includes but is not limited to: a direct current to direct current (direct current to direct current, DCDC) converter or a power storage converter (power conversion system, PCS). The conversion unit 104 may be isolated, or may be non-isolated.

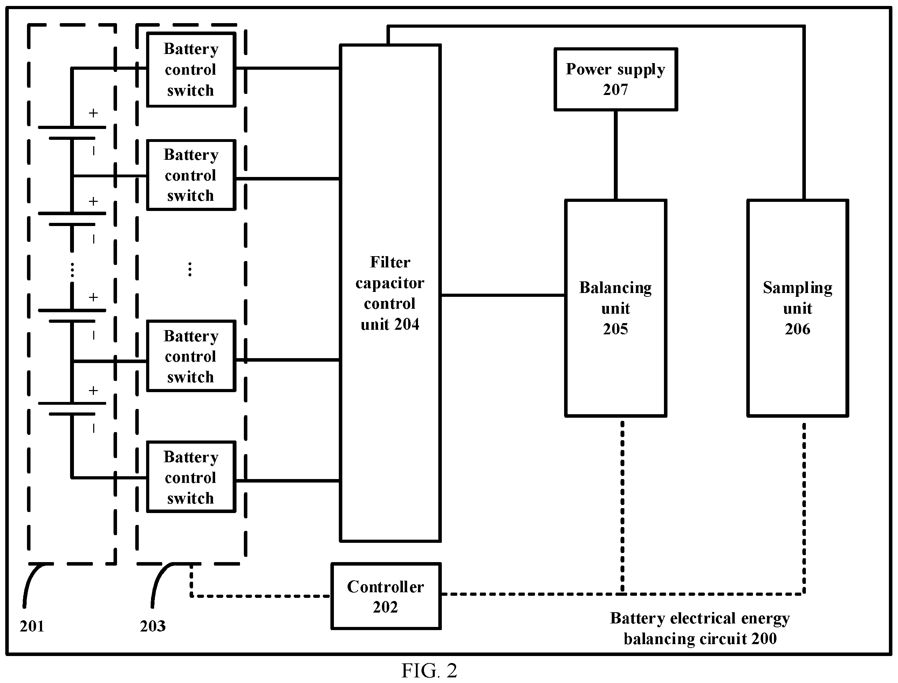

In an embodiment of this application, FIG. 2 is a schematic diagram of a structure of a battery electrical energy balancing circuit 200. The circuit is applied to a series battery pack 201 including N batteries connected in series. The circuit includes a controller 202, N battery control switches 203, a filter capacitor control unit 204, a balancing unit 205, and a sampling unit 206. Each battery in the N batteries is connected to a first end of each battery control switch in the N battery control switches 203 in a one-to-one correspondence, and a second end of each battery control switch in the N battery control switches 203 is connected to the filter capacitor control unit 204. The filter capacitor control unit 204 is connected to the balancing unit 205 and the sampling unit 206. The balancing unit 205 is connected to a power supply 207, and the power supply 207 is configured to supply power to the balancing unit 205. The balancing unit 205 is configured to charge/discharge a target battery, where the target battery is any battery of the N batteries. The sampling unit 206 is configured to detect a voltage of the target battery. The filter capacitor control unit 204 is configured to filter a current input by the balancing unit 205 to the target battery. The controller 202 is configured to control a battery control switch 203 connected to the target battery to be closed, to obtain a voltage value of the target battery detected by the sampling unit 206; or control the balancing unit 205 to charge/discharge the target battery. Optionally, the power supply 207 may be an external direct current source or an external alternating current source, or an energy storage battery, which is not specifically limited herein.

The controller 202 in this embodiment of this application may be a central processing unit (central processing unit, CPU), a general-purpose processor, digital signal processing (digital signal processing, DSP), an application-specific integrated circuit (application-specific integrated circuit, ASIC), a field programmable gate array (field programmable gate array, FPGA), or another programmable logic device, a transistor logic device, a hardware component, or any combination thereof. The controller 202 may implement or execute logical blocks, modules, and circuits in various examples described with reference to content disclosed in this application. Alternatively, the processor may be a combination of processors implementing a computing function, for example, a combination of one or more microprocessors, or a combination of a DSP and a microprocessor. The controller 202 may be independent of the battery electrical energy balancing circuit 200, or may be integrated in another unit, which is not specifically limited herein.

In addition, the controller 202 may also include a battery management system BMS, and the BMS is configured to detect battery parameters of the series battery pack 201 including the N batteries connected in series, to prevent the series battery pack 201 including the N batteries connected in series from being overcharged or overdischarged or the like, so as to prolong service life of each battery in the series battery pack 201 including the N batteries connected in series. For example, there are a plurality of electrical connection points between the BMS and each battery in the series battery pack 201 including the N batteries connected in series, and the BMS detects whether an arc fault occurs at each electrical connection point, and takes a corresponding protective measure.

The balancing unit 205 in this embodiment of this application may be a direct current converter. The controller 202 may control the balancing unit 205 based on a preset battery balancing algorithm to perform balancing control on a battery requiring balancing. Optionally, the controller 202 charges/discharges each battery in the series battery pack 201 by controlling the balancing unit, to achieve SOC balancing, and a corresponding charge/discharge current may be transferred by using a positive balancing busbar and a negative balancing busbar added in the balancing unit 205.

The sampling unit 206 in this embodiment of this application may collect a battery parameter of each battery in the N batteries connected in series, where the battery parameter includes at least a voltage parameter, and sends the voltage parameter of each battery to the controller 202. The controller 202 determines whether each battery in the N batteries is abnormal based on the voltage parameter of each battery. The sampling unit 206 collects the voltage of each battery in the N batteries, to achieve detection on the voltage of each battery in the battery pack. Moreover, the battery parameter may further include a temperature and a current. Therefore, in a possible implementation, the battery electrical energy balancing circuit 200 may further include a current detection circuit and a temperature detection circuit, the current detection circuit is configured to detect a current value of each battery in the N batteries, and the temperature detection circuit is configured to detect a temperature value of each battery in the N batteries. In this application, the sampling unit 206 may continuously sample, a plurality of times, each battery in the series battery pack including the N batteries connected in series, and when sampling values consecutively sampled a plurality of times are basically the same, the sampling value is taken, so as to improve precision of the sampling voltage of the battery while reducing errors.

The filter capacitor control unit 204 in this embodiment of this application may include a filter capacitor, to filter a current input by the balancing unit 205 to the target battery, and filter out a pulsating ripple caused by the power supply 207, thereby achieving an effect of a smooth current. To prevent an excessively large filter capacitor C₀ from affecting a sampling delay of the sampling unit 206, the filter capacitor control unit 204 may further include a control switch, to control whether to connect the filter capacitor C₀ to the circuit by switching on/off a switch, so as to prevent the excessively large filter capacitor C₀ from affecting sampling of the sampling unit 206.

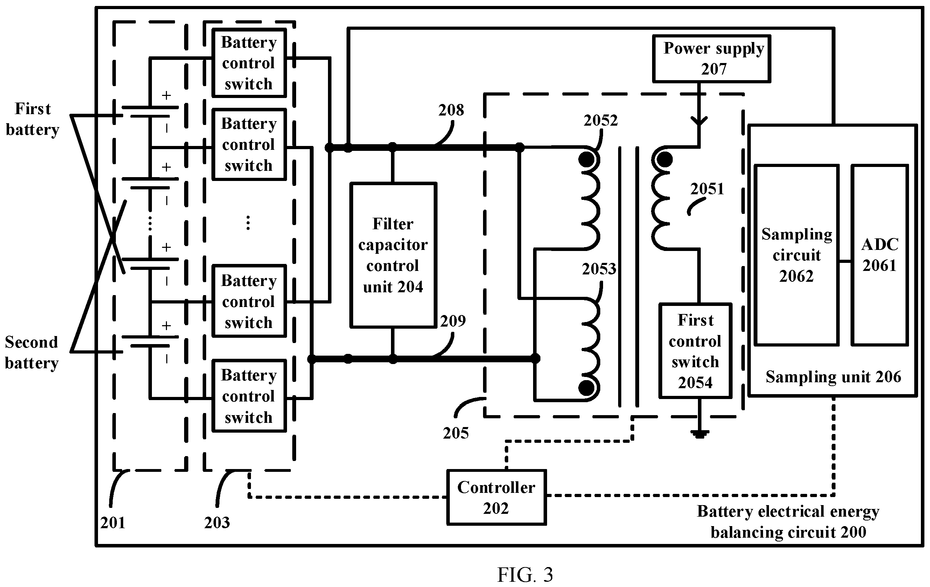

In a possible implementation, as shown in FIG. 3, the battery electrical energy balancing circuit 200 further includes a first busbar 208 and a second busbar 209, and the N batteries include a plurality of first batteries and a plurality of second batteries. The balancing unit 205 includes a primary-side winding 2051, a first secondary-side winding 2052, a second secondary-side winding 2053, and a first control switch 2054. The sampling unit 206 includes an analog to digital converter ADC 2061 and a sampling circuit 2062.

A second end of a battery control switch 203 connected to the first battery is connected to the first busbar 208, and a second end of a battery control switch 203 connected to the second battery is connected to the second busbar 209. The first busbar 208 is connected to a first end of the filter capacitor control unit 204, and the second busbar 209 is connected to a second end of the filter capacitor control unit 204. The first busbar 208 is connected to the first secondary-side winding 2052, and the second busbar 209 is connected to the second secondary-side winding 2053. The primary-side winding 2051 is connected to the power supply 207, and the primary-side winding 2051 is grounded through the first control switch 2054. The first busbar 208 is connected to a first input end of the sampling circuit 2062, the second busbar 209 is connected to a second input end of the sampling circuit 2062, an output end of the sampling circuit 2062 is connected to the ADC 2061, and an output end of the ADC 2061 is connected to the controller 202.

When detecting the voltage value of the target battery, the controller 202 in this embodiment of this application controls the battery control switch 203 connected to the target battery to be closed, to obtain the voltage value of the target battery detected by the ADC 2061, where the target battery is any battery of the N batteries; or when performing balancing on the target battery, controls the balancing unit 205 to charge/discharge the target battery. The battery control switches 203 are connected to the first busbar 208 and the second busbar 209. When the battery control switches are successively closed (only one battery control switch is allowed to be closed at a time), a voltage of a positive electrode of a corresponding battery relative to a reference of the battery pack is applied to a bleeder resistor of the sampling circuit 2062. After being attenuated by the bleeder resistor, the voltage is sent to an analog to digital converter (analog to digital converter, ADC) for A/D conversion, to obtain a voltage value of the corresponding battery.

The first busbar 208 and the second busbar 209 may jointly form an odd-even busbar. Specifically, in each battery in the series battery pack 201 including the N batteries connected in series, positive electrodes of all oddnumbered batteries are connected to each other and then are connected to the first busbar 208, and positive electrodes of all even-numbered batteries are connected to each other and then are connected to the second busbar 209. After all the even-numbered batteries are connected to each other, they are connected to a negative electrode of a 1^{st} battery of the series battery pack 201 including the N batteries connected in series.

Fuses may be disposed on the first busbar 208 and the second busbar 209 to prevent a current on the busbar from being too large, so as to further improve safety of the battery electrical energy balancing circuit 200. Details are not described herein.

Optionally, the filter capacitor control unit 204 in this embodiment of this application may specifically include a filter capacitor C₀ and a second control switch, the second control switch and the filter capacitor are connected in series. The controller 202 is specifically configured to control the battery control switch connected to the target battery to be closed and control the second control switch to be open, to obtain the voltage value of the target battery detected by the sampling unit 206; or control the battery control switch connected to the target battery to be closed and control the second control switch to be closed, to control the balancing unit 205 to charge/discharge the target battery. The connection between the filter capacitor and the sampling unit 206 is disconnected by using the second control switch, to prevent an excessively large filter capacitor C₀ from affecting sampling precision of the sampling unit 206.

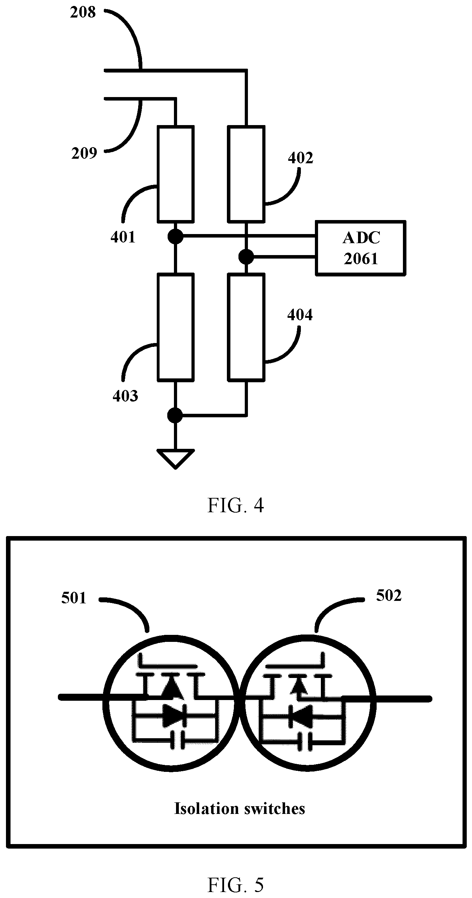

The ADC 2061 in the sampling unit 206 is configured to convert an analog quantity input by the sampling circuit 2062 into a digital quantity. The sampling circuit 2062 in this embodiment of this application may include a bleeder resistor, to divide a voltage of a battery by using the bleeder resistor. In a possible implementation, as shown in FIG. 4, the sampling circuit 2062 may include a first bleeder resistor 401, a second bleeder resistor 402, a third bleeder resistor 403, and a fourth bleeder resistor 404. Voltages output by the first busbar 208 and the second busbar 209 are divided by the first bleeder resistor 401, the second bleeder resistor 402, the third bleeder resistor 403, and the fourth bleeder resistor 404 and then sent to the ADC 2061 for sampling.

Each switch in the N battery control switches 203 in this application is a paired MOS transistor structure, as shown in FIG. 5. FIG. 5 is a schematic diagram of a structure of a paired MOS transistor. The paired MOS transistor structure includes a first switch tube 501 and a second switch tube 502. The first switch tube 501 and the second switch tube 502 may be one or more types of switch devices such as metal oxide semiconductor field effect transistors (metal oxide semiconductor field effect transistor, MOSFET), bipolar junction transistors (bipolar junction transistor, BJT), insulated gate bipolar transistors (insulated gate bipolar transistor, IGBT), field effect transistors (field effect transistor, FET), and silicon carbide (SiC) or gallium nitride (GaN) power tubes, which are not listed one by one in this embodiment of this application. The switch tube may include a first electrode (source), a second electrode (drain), and a control electrode (gate). The controller 202 controls a switch device to be turned on or off by using the control electrode.

For example, in this embodiment of this application, to achieve an isolation function of the battery control switch, the MOS transistor in this embodiment of this application is an N-channel metal oxide semiconductor (negative channel-metal-oxide-semiconductor, NMOS). To supply power to the battery control switch, the controller 202 may further include an auxiliary driving power supply and the like.

A source of the first switch tube 501 is connected to a source of the second switch tube 502, gates of the first switch tube 501 and the second switch tube 502 are connected to the controller 202, a drain of the first switch tube 501 is connected to the battery, and a drain of the second switch tube 502 is connected to the corresponding first busbar 208 and second busbar 209.

The ADC 2061 may collect a battery parameter of each battery in the N batteries connected in series, where the battery parameter includes at least a voltage parameter, and sends the voltage parameter of each battery to the controller 202. The controller 202 determines whether each battery in the N batteries is abnormal based on the voltage parameter of each battery. The sampling circuit 2062 collects the voltage of each battery in the N batteries, to achieve detection on the voltage of each battery in the battery pack. Moreover, the battery parameter may further include a temperature and a current. Therefore, in a possible implementation, the battery electrical energy balancing circuit 200 may further include a current detection circuit and a temperature detection circuit, the current detection circuit is configured to detect a current value of each battery in the N batteries, and the temperature detection circuit is configured to detect a temperature value of each battery in the N batteries.

Therefore, in a possible implementation, the battery electrical energy balancing circuit 200 may further include a current detection circuit and a temperature detection circuit, the current detection circuit is configured to detect a current value of each battery in the N batteries, and the temperature detection circuit is configured to detect a temperature value of each battery in the N batteries.

For example, the current detection circuit may include a current transformer (current transformer, CT), and the current transformer is an instrument that converts, based on a principle of electromagnetic induction, a large current on a primary side into a small current on a secondary side for measurement. The current transformer includes a closed core and windings. In a line with a current needing to be measured, the current transformer is sleeved on the first busbar 208 or the second busbar 209. Closure of the N battery control switches 203 is controlled by using a principle of electromagnetic mutual induction, to detect a current on the first busbar 208 or the second busbar 209, so as to determine a current parameter of the battery. Specifically, a magnetic field is generated around a busbar to be measured, and after the current transformer is sleeved on a cable to be measured, a coil on the current transformer generates an induced current due to a magnetic field of the cable to be measured. After the induced current is amplified, a current of the cable to be measured may be obtained.

The foregoing circuit may be utilized to detect a current and a temperature of each battery in the N batteries. When determining that the N batteries are abnormal, the controller 202 controls the battery pack to stop charging or discharging in time, to protect the series battery pack 201 including the N batteries connected in series and prolong service life. When overvoltage or undervoltage occurs in a battery in the battery pack, the electrochemical cell is discharged or charged by using the balancing unit 205, to improve performance of the battery and safety of the series battery pack 201, and prolong the service life of the battery pack.

In a possible implementation, the controller 202 is specifically configured to: when it is detected that a voltage difference between a first target battery and a second target battery is greater than a specified voltage threshold, where the first target battery and the second target battery are any two batteries in the series battery pack including the N batteries connected in series, and a voltage value of the first target battery is less than a voltage value of the second target battery, control a battery control switch connected to the first target battery to be closed, to charge the first target battery by using the balancing unit 205; and control a battery control switch connected to the second target battery to be closed, to discharge the second target battery by using the balancing unit 205.

The controller 202 performs balancing control on to-be-balanced batteries according to a preset battery balancing algorithm based on voltage values of the batteries collected by the ADC 2061. Specifically, the controller may determine a voltage of each battery, and if it is determined that the voltage difference between the first target battery and the second target battery is greater than the specified voltage threshold, where the voltage value of the first target battery is less than the voltage value of the second target battery, undervoltage occurs in the first target battery, and the balancing unit 205 charges the battery; or overvoltage occurs in the second target battery, the balancing unit 205 discharges the battery.

It should be noted that when there are a plurality of first target batteries or second target batteries, they may be sorted based on voltages of the batteries, and balancing may be performed on the batteries based on an order obtained through sorting. A specific sorting manner is not specifically limited. For example, a battery with a lowest voltage is selected for charging from the plurality of batteries, and a battery with a highest voltage is selected for discharging from the plurality of batteries.

In addition, when the battery parameter may further include the current parameter, correspondingly, the controller 202 may further determine a current of each battery in the N batteries, and if the current of the battery is greater than a rated current value, an overcurrent phenomenon occurs in the battery, and charging or discharging of the battery or a battery pack including the battery is stopped. When the battery parameter may further include the temperature parameter, correspondingly, the controller 202 may further determine a temperature of each battery in the N batteries or a temperature of the entire battery pack, and if a temperature of at least one battery in the N batteries the temperature of the entire battery pack is greater than a preset temperature value, it is determined that the battery or the battery pack is overheated, and charging or discharging of the battery or a battery pack including the battery is stopped. If the battery parameter includes at least two parameters of the voltage, the current, and the temperature, whether the battery is abnormal is comprehensively determined based on the battery parameter of each battery.

For example, the controller 202 determines the voltage of each battery. If it is determined that a voltage of a battery is less than the specified voltage value, a battery with a highest voltage may be obtained first from the series battery pack in which the battery is located, and a loop is established between the battery whose voltage is less than the specified voltage value and the battery with the highest voltage. The battery with the voltage less than the specified voltage value is charged by the battery with the highest voltage by using the loop until the battery with the voltage less than the specified voltage value reaches the specified voltage value.

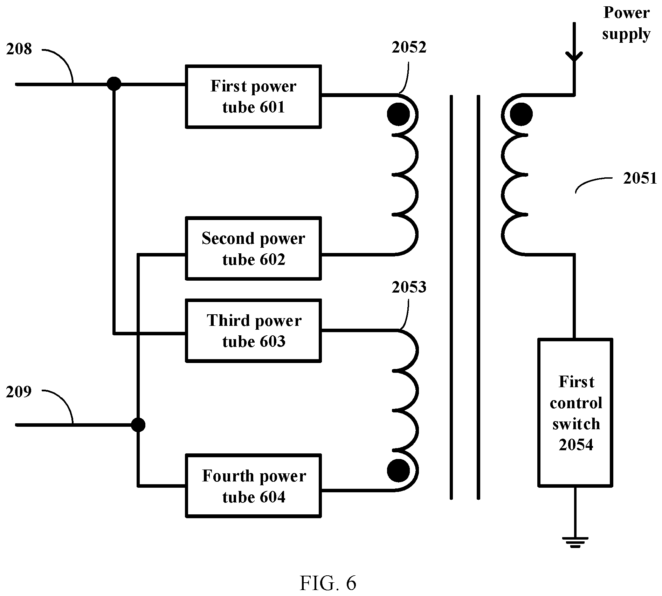

To reduce a quantity of high-frequency switch tubes so that a driving circuit in the controller 202 is easy to implement, in a possible implementation, as shown in FIG. 6, the balancing unit 205 further includes a first power tube 601, the second power tube 602, the third power tube 603, and the fourth power tube 604.

A first end of the first power tube 601 is connected to a dotted terminal of the first secondary-side winding 2052, a second end of the first power tube 601 is connected to the first busbar 208, a first end of the second power tube 602 is connected to an undotted terminal of the first secondary-side winding 2052, and a second end of the second power tube 602 is connected to the second busbar 209. A first end of the third power tube 603 is connected to an undotted terminal of the second secondary-side winding 2053, a second end of the third power tube 603 is connected to the first busbar 208, a first end of the fourth power tube 604 is connected to a dotted terminal of the second secondary-side winding 2053, and a second end of the fourth power tube 604 is connected to the second busbar 209. The power supply is connected to a dotted terminal of the primary-side winding 2051, and an undotted terminal of the primary-side winding 2051 is grounded through the first control switch 2054. It should be noted that the first control switch 2054 may also be a paired MOS tube, and the first power tube 601, the second power tube 602, the third power tube 603, and the fourth power tube 604 may be any one of the switch device types described in the foregoing embodiment.

Specifically, in the foregoing embodiment, the transformer in the balancing unit 205 uses design of a single primary-side winding and double secondary-side windings. There are four switches for control between the busbar switch network bus and windings of the transformer, where two switches are low-frequency signal switches for driving, and two switches are high-frequency signal switches for driving, thereby reducing a quantity of high-frequency switches for driving, so that a driving circuit in the controller 202 is easy to implement and costs of high-frequency driving are reduced.

The following describes several specific manners provided in this embodiment of this application in which the controller 202 charges/discharges the battery by controlling disconnection of the first power tube 601, the second power tube 602, the third power tube 603, the fourth power tube 604, and the first control switch 2054, to achieve active balancing.

Manner 1: During charging of the battery, if a voltage of the first busbar is greater than a voltage of the second busbar, controlling the first power tube and the second power tube to be open and the third power tube to be closed, setting the fourth power tube to a rectification state, and controlling the first control switch to be open, to release electrical energy stored in excitation inductance of the primary-side winding to the battery through the second secondary-side winding. Specifically, a battery control switch in the N battery control switches 203 that corresponds to a battery voltage is selected and is closed. When the battery voltage is relatively low, the battery is charged through a flyback converter by using the power supply or prestored electrical energy, to achieve charging balancing of the low-voltage battery. Electrical energy stored in the exciting inductance is released to the low-voltage battery through the second secondary-side winding.

Manner 2: During charging of the battery, if a voltage of the first busbar is less than a voltage of the second busbar, controlling the third power tube and the fourth power tube to be open and the second power tube to be closed, setting the first power tube to a rectification state, and controlling the first control switch to be open, to release electrical energy stored in excitation inductance of the primary-side winding to the battery through the first secondary-side winding.

Manner 3: During discharging of the battery, if a voltage of the first busbar is greater than a voltage of the second busbar, controlling the third power tube and the fourth power tube to be open and the second power tube to be closed, setting the first power tube to a rectification state, and controlling the first control switch to be closed, to store electrical energy in excitation inductance of the primary-side winding. Specifically, a battery control switch in the N battery control switches 203 that corresponds to a battery voltage is selected and is closed. When the battery voltage is relatively high, electrical energy of the high-voltage battery is released through a flyback converter, to achieve balancing of the high-voltage battery. Electrical energy stored in the exciting inductance is released to the low-voltage battery through the second secondary-side winding.

Manner 4: During discharging of the battery, if a voltage of the first busbar is less than a voltage of the second busbar, controlling the first power tube and the second power tube to be open and the third power tube to be closed, setting the first control switch to a rectification state, and controlling the fourth power tube to be closed, to store electrical energy in excitation inductance of the primary-side winding. In the foregoing manners, the controller 202 can control the balancing unit 205 to achieve balanced discharging of a high-voltage battery and balanced charging of a low-voltage battery by using a principle of the flyback converter.

The battery electrical energy balancing circuit in this application uses design of a single primary-side winding and double secondary-side windings. There are a plurality of switches for control between the battery control switches and the windings of the balancing unit, and two switches are high-frequency switches for driving, thereby reducing a quantity of high-frequency switches for driving, so that a driving circuit in the controller is easier to implement and costs of high-frequency driving are reduced. Moreover, the battery control switch in this application uses a paired MOS structure, to achieve bidirectional conduction. In addition, the controllable filter capacitor is introduced, so that the voltage sampling circuit and the balancing unit reuse the N battery control switches with a better effect. This not only achieves an active balancing function but also achieves a battery sampling function, which do not affect each other, thereby reducing complexity of a BMS used in a conventional solution. In addition, the power supply in this application is not directly connected to the battery, but instead, is charged indirectly through a transformer of the balancing unit, so that energy is fed back through an indirect feedback method, thereby resolving a problem of continuous charging when the battery is fully charged.

In addition, this application further provides a battery electrical energy balancing method, applied to a battery electrical energy balancing circuit 200. The method includes: controlling a battery control switch connected to the target battery to be closed, to obtain a voltage value of the target battery detected by the sampling unit; or controlling the balancing unit to charge/discharge the target battery.

In a possible implementation, the method further includes: controlling the battery control switch connected to the target battery to be closed and controlling a second control switch to be open, to obtain the voltage value of the target battery detected by the sampling unit; or controlling the battery control switch connected to the target battery to be closed and controlling a second control switch to be closed, to control the balancing unit to charge/discharge the target battery.

In a possible implementation, the controlling the balancing unit to charge/discharge the target battery includes: when it is detected that a voltage difference between a first target battery and a second target battery is greater than a specified voltage threshold, where the first target battery and the second target battery are any two batteries in the series battery pack including the N batteries connected in series, and a voltage value of the first target battery is less than a voltage value of the second target battery, controlling a battery control switch connected to the first target battery to be closed, to control the balancing unit to charge the first target battery; and controlling a battery control switch connected to the second target battery to be closed, to control the balancing unit to discharge the second target battery.

A person skilled in the art should understand that embodiments of this application may be provided as a method, a system, or a computer program product. Therefore, this application may use a form of a hardware-only embodiment, a software-only embodiment, or an embodiment with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. The computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

The computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clearly that a person skilled in the art can make various modifications and variations to this application without departing from the spirit and scope of this application. This application is intended to cover these modifications and variations of this application provided that they fall within the scope of protection defined by the following claims.

## Claims

1. A battery electrical energy balancing circuit (200), applied to a series battery pack (201) comprising N batteries connected in series, wherein the circuit comprises: a controller (202), N battery control switches (203), a filter capacitor control unit (204), a balancing unit (205), and a sampling unit (206);
each battery in the N batteries is connected to a first end of each battery control switch in the N battery control switches in a one-to-one correspondence, and a second end of each battery control switch in the N battery control switches is connected to the filter capacitor control unit; the filter capacitor control unit is connected to the balancing unit and the sampling unit; and the balancing unit is connected to a power supply (207), and the power supply is configured to supply power to the balancing unit;
the balancing unit is configured to charge/discharge a target battery, wherein the target battery is any battery of the N batteries;
the sampling unit is configured to detect a voltage of the target battery;
the filter capacitor control unit is configured to filter a current input by the balancing unit to the target battery; and
the controller is configured to control a battery control switch connected to the target battery to be closed, to obtain a voltage value of the target battery detected by the sampling unit; or control the balancing unit to charge/discharge the target battery;
wherein the battery electrical energy balancing circuit further comprises a first busbar (208) and a second busbar (209), and the N batteries comprise a plurality of first batteries and a plurality of second batteries;
the balancing unit comprises a primary-side winding (2051), a first secondary-side winding (2052), a second secondary-side winding (2053), and a first control switch (2054);
the sampling unit comprises an analog to digital converter ADC (2061) and a sampling circuit (2062);
a second end of a first battery control switch of the N battery control switches connected to a first battery of the plurality of first batteries is connected to the first busbar, and a second end of a second battery control switch of the N battery control switches connected to a first battery of the plurality of second batteries is connected to the second busbar;
the first busbar is connected to a first end of the filter capacitor control unit, and the second busbar is connected to a second end of the filter capacitor control unit;
the first busbar is connected to the first secondary-side winding, and the second busbar is connected to the second secondary-side winding;
the primary-side winding is connected to the power supply, and the primary-side winding is grounded through the first control switch; and
the first busbar is connected to a first input end of the sampling circuit, the second busbar is connected to a second input end of the sampling circuit, an output end of the sampling circuit is connected to the ADC, and an output end of the ADC is connected to the controller;
**characterised in that**
the balancing unit further comprises a first power tube (601), a second power tube (602), a third power tube (603), and a fourth power tube (604);
a first end of the first power tube is connected to a dotted terminal of the first secondary-side winding, a second end of the first power tube is connected to the first busbar, a first end of the second power tube is connected to an undotted terminal of the first secondary-side winding, a second end of the second power tube is connected to the second busbar, a first end of the third power tube is connected to an undotted terminal of the second secondary-side winding, a second end of the third power tube is connected to the first busbar, a first end of the fourth power tube is connected to a dotted terminal of the second secondary-side winding, and a second end of the fourth power tube is connected to the second busbar; and
the power supply is connected to a dotted terminal of the primary-side winding, and an undotted terminal of the primary-side winding is grounded through the first control switch.

2. The balancing circuit according to claim 1, wherein the filter capacitor control unit specifically comprises a filter capacitor and a second control switch, the second control switch and the filter capacitor are connected in series; and
the controller is specifically configured to control the battery control switch connected to the target battery to be closed and control the second control switch to be open, to obtain the voltage value of the target battery detected by the sampling unit; or control the battery control switch connected to the target battery to be closed and control the second control switch to be closed, to control the balancing unit to charge/discharge the target battery.

3. The balancing circuit according to any one of claims 1 to 2, wherein the controller is specifically configured to:
when it is detected that a voltage difference between a first target battery and a second target battery is greater than a specified voltage threshold, wherein the first target battery and the second target battery are any two batteries in the series battery pack comprising the N batteries connected in series, and a voltage value of the first target battery is less than a voltage value of the second target battery,
control a battery control switch connected to the first target battery to be closed, control the balancing unit to charge the first target battery, and control a battery control switch connected to the second target battery to be closed, to control the balancing unit to discharge the second target battery.

4. The balancing circuit according to any preceding claim, wherein the controller is specifically configured to:
during charging of the target battery, if a voltage of the first busbar is greater than a voltage of the second busbar, control the first power tube and the second power tube to be open and the third power tube to be closed, set the fourth power tube to a rectification state, and control the first control switch to be open, to release electrical energy stored in excitation inductance of the primary-side winding to the battery through the second secondary-side winding.

5. The balancing circuit according to any preceding claim, wherein the controller is specifically configured to:
during charging of the target battery, if a voltage of the first busbar is less than a voltage of the second busbar, control the third power tube and the fourth power tube to be open and the second power tube to be closed, set the first power tube to a rectification state, and control the first control switch to be open, to release electrical energy stored in excitation inductance of the primary-side winding to the battery through the first secondary-side winding.

6. The balancing circuit according to any preceding claim, wherein the controller is specifically configured to:
during discharging of the target battery, if a voltage of the first busbar is greater than a voltage of the second busbar, control the third power tube and the fourth power tube to be open and the second power tube to be closed, set the first power tube to a rectification state, and control the first control switch to be closed, to store electrical energy in excitation inductance of the primary-side winding.

7. The balancing circuit according to any preceding claim , wherein the controller is specifically configured to:
during discharging of the target battery, if a voltage of the first busbar is less than a voltage of the second busbar, control the first power tube and the second power tube to be open and the third power tube to be closed, set the first control switch to a rectification state, and control the fourth power tube to be closed, to store electrical energy in excitation inductance of the primary-side winding.

8. The balancing circuit according to any preceding claim, wherein each battery control switch in the N battery control switches is a paired MOS transistor, and the paired MOS transistor comprises a first switch tube (501) and a second switch tube (502); and
a source of the first switch tube is connected to a source of the second switch tube, gates of the first switch tube and the second switch tube are connected to the controller, a drain of the first switch tube is connected to the battery, and a drain of the second switch tube is connected to the corresponding first busbar and second busbar.

9. A battery electrical energy balancing method, applied to the battery electrical energy balancing circuit according to any one of claims 1 to 8, wherein the method comprises:
controlling a battery control switch connected to the target battery to be closed, to obtain a voltage value of the target battery detected by the sampling unit; or controlling the balancing unit to charge/discharge the target battery.

10. The method according to claim 9, wherein the method further comprises:
controlling the battery control switch connected to the target battery to be closed and controlling the second control switch to be open, to obtain the voltage value of the target battery detected by the sampling unit; or controlling the battery control switch connected to the target battery to be closed and controlling the second control switch to be closed, to control the balancing unit to charge/discharge the target battery.

11. The method according to claim 9 or 10, wherein the controlling the balancing unit to charge/discharge the target battery comprises:
when it is detected that a voltage difference between a first target battery and a second target battery is greater than a specified voltage threshold, wherein the first target battery and the second target battery are any two batteries in the series battery pack comprising the N batteries connected in series, and a voltage value of the first target battery is less than a voltage value of the second target battery,
control a battery control switch connected to the first target battery to be closed, control the balancing unit to charge the first target battery, and control a battery control switch connected to the second target battery to be closed, to control the balancing unit to discharge the second target battery.

12. An energy storage system, comprising: at least one energy storage unit and at least one conversion unit in a one-to-one correspondence with the at least one energy storage unit, wherein each conversion unit in the at least one conversion unit is connected to a power grid, and each energy storage unit in the at least one energy storage unit comprises a series battery pack comprising N batteries connected in series and the battery electrical energy balancing circuit according to any one of claims 1 to 8;
each energy storage unit in the at least one energy storage unit is configured to: output a direct current to a corresponding conversion unit, or receive a direct current input by a corresponding conversion unit and charge
the series battery pack comprising the N batteries connected in series; and
each conversion unit in the at least one conversion unit is configured to: convert a direct current input by a corresponding energy storage unit into an alternating current and output it to the power grid; or receive an alternating current input by the power grid, convert the alternating current a direct current, and output it to a corresponding energy storage unit.

## Patentansprüche

1. Ausgleichsschaltung (200) elektrischer Batterieenergie, die auf einen Reihenbatteriepack (201) angewandt wird, der N Batterien umfasst, die in Reihe geschaltet sind, wobei die Schaltung Folgendes umfasst: eine Steuerung (202), N Batteriesteuerschalter (203), eine Filterkondensatorsteuereinheit (204), eine Ausgleichseinheit (205) und eine Abtasteinheit (206);
wobei jede Batterie in den N Batterien in einer Eins-zu-Eins-Entsprechung mit einem ersten Ende jedes Batteriesteuerschalters in den N Batteriesteuerschaltern verbunden ist und ein zweites Ende jedes Batteriesteuerschalters in den N Batteriesteuerschaltern mit der Filterkondensatorsteuereinheit verbunden ist; die Filterkondensatorsteuereinheit mit der Ausgleichseinheit und der Abtasteinheit verbunden ist; und die Ausgleichseinheit mit einer Leistungsversorgung (207) verbunden ist und die Leistungsversorgung dazu konfiguriert ist, die Ausgleichseinheit mit Leistung zu versorgen;
die Ausgleichseinheit dazu konfiguriert ist, eine Zielbatterie zu laden/entladen, wobei die Zielbatterie eine beliebige Batterie der N Batterien ist;
die Abtasteinheit dazu konfiguriert ist, eine Spannung der Zielbatterie zu detektieren;
die Filterkondensatorsteuereinheit dazu konfiguriert ist, einen Strom zu filtern, der durch die Ausgleichseinheit in die Zielbatterie eingegeben wird; und
die Steuerung dazu konfiguriert ist, einen Batteriesteuerschalter, der mit der Zielbatterie verbunden ist, zu steuern, um geschlossen zu sein, um einen Spannungswert der Zielbatterie zu erlangen, der durch die Abtasteinheit detektiert wird; oder die Ausgleichseinheit zu steuern, um die Zielbatterie zu laden/entladen;
wobei die Ausgleichsschaltung elektrischer Batterieenergie ferner eine erste Sammelschiene (208) und eine zweite Sammelschiene (209) umfasst und die N Batterien eine Vielzahl erster Batterien und eine Vielzahl zweiter Batterien umfassen; die Ausgleichseinheit eine Primärseitenwicklung (2051), eine erste Sekundärseitenwicklung (2052), eine zweite Sekundärseitenwicklung (2053) und einen ersten Steuerschalter (2054) umfasst;
die Abtasteinheit einen Analog-zu-Digital-Wandler, ADC (2061), und eine Abtastschaltung (2062) umfasst;
ein zweites Ende eines ersten Batteriesteuerschalters der N Batteriesteuerschalter, die mit einer ersten Batterie der Vielzahl erster Batterien verbunden sind, mit der ersten Sammelschiene verbunden ist und ein zweites Ende eines zweiten Batteriesteuerschalters der N Batteriesteuerschalter, die mit einer ersten Batterie der Vielzahl zweiter Batterien verbunden sind, mit der zweiten Sammelschiene verbunden ist;
die erste Sammelschiene mit einem ersten Ende der Filterkondensatorsteuereinheit verbunden ist und die zweite Sammelschiene mit einem zweiten Ende der Filterkondensatorsteuereinheit verbunden ist;
die erste Sammelschiene mit der ersten Sekundärseitenwicklung verbunden ist und die zweite Sammelschiene mit der zweiten Sekundärseitenwicklung verbunden ist;
die Primärseitenwicklung mit der Leistungsversorgung verbunden ist und die Primärseitenwicklung über den ersten Steuerschalter geerdet ist; und
die erste Sammelschiene mit einem ersten Eingabeende der Abtastschaltung verbunden ist, die zweite Sammelschiene mit einem zweiten Eingabeende der Abtastschaltung verbunden ist, ein Ausgabeende der Abtastschaltung mit dem ADC verbunden ist und ein Ausgabeende des ADC mit der Steuerung verbunden ist; **dadurch gekennzeichnet, dass**
die Ausgleichseinheit ferner eine erste Leistungsröhre (601), eine zweite Leistungsröhre (602), eine dritte Leistungsröhre (603) und eine vierte Leistungsröhre (604) umfasst;
ein erstes Ende der ersten Leistungsröhre mit einem gepunkteten Anschluss der ersten Sekundärseitenwicklung verbunden ist, ein zweites Ende der ersten Leistungsröhre mit der ersten Sammelschiene verbunden ist, ein erstes Ende der zweiten Leistungsröhre mit einem ungepunkteten Anschluss der ersten Sekundärseitenwicklung verbunden ist, ein zweites Ende der zweiten Leistungsröhre mit der zweiten Sammelschiene verbunden ist, ein erstes Ende der dritten Leistungsröhre mit einem ungepunkteten Anschluss der zweiten Sekundärseitenwicklung verbunden ist, ein zweites Ende der dritten Leistungsröhre mit der ersten Sammelschiene verbunden ist, ein erstes Ende der vierten Leistungsröhre mit einem gepunkteten Anschluss der zweiten Sekundärseitenwicklung verbunden ist und ein zweites Ende der vierten Leistungsröhre mit der zweiten Sammelschiene verbunden ist; und
die Leistungsversorgung mit einem gepunkteten Anschluss der Primärseitenwicklung verbunden ist und ein ungepunkteter Anschluss der Primärseitenwicklung über den ersten Steuerschalter geerdet ist.

2. Ausgleichsschaltung nach Anspruch 1, wobei die Filterkondensatorsteuereinheit speziell einen Filterkondensator und einen zweiten Steuerschalter umfasst, der zweite Steuerschalter und der Filterkondensator in Reihe geschaltet sind; und
die Steuerung speziell dazu konfiguriert ist, den Batteriesteuerschalter, der mit der Zielbatterie verbunden ist, zu steuern, um geschlossen zu sein, und den zweiten Steuerschalter zu steuern, um geöffnet zu sein, um den Spannungswert der Zielbatterie zu erlangen, der durch die Abtasteinheit detektiert wird; oder den Batteriesteuerschalter, der mit der Zielbatterie verbunden ist, zu steuern, um geschlossen zu sein, und den zweiten Steuerschalter zu steuern, um geschlossen zu sein, um die Ausgleichseinheit zu steuern, um die Zielbatterie zu laden/entladen.

3. Ausgleichsschaltung nach einem der Ansprüche 1 bis 2, wobei die Steuerung speziell zu Folgendem konfiguriert ist:
wenn detektiert wird, dass eine Spannungsdifferenz zwischen einer ersten Zielbatterie und einer zweiten Zielbatterie größer als ein definierter Spannungsschwellenwert ist, wobei die erste Zielbatterie und die zweite Zielbatterie zwei beliebige Batterien in dem Reihenbatteriepack sind, der die N Batterien umfasst, die in Reihe geschaltet sind, und ein Spannungswert der ersten Zielbatterie kleiner als ein Spannungswert der zweiten Zielbatterie ist,
Steuern eines Batteriesteuerschalters, der mit der ersten Zielbatterie verbunden ist, um geschlossen zu sein, Steuern der Ausgleichseinheit, um die erste Zielbatterie zu laden, und
Steuern eines Batteriesteuerschalters, der mit der zweiten Zielbatterie verbunden ist, um geschlossen zu sein, um die Ausgleichseinheit zu steuern, um die zweite Zielbatterie zu entladen.

4. Ausgleichsschaltung nach einem der vorhergehenden Ansprüche, wobei die Steuerung speziell zu Folgendem konfiguriert ist:
während des Ladens der Zielbatterie, falls eine Spannung der ersten Sammelschiene größer als eine Spannung der zweiten Sammelschiene ist, Steuern der ersten Leistungsröhre und der zweiten Leistungsröhre, um geöffnet zu sein, und der dritten Leistungsröhre, um geschlossen zu sein, Einstellen der vierten Leistungsröhre in einen Gleichrichtungszustand und Steuern des ersten Steuerschalters, um geöffnet zu sein, um elektrische Energie, die in einer Erregerinduktanz der Primärseitenwicklung gespeichert ist, über die zweite Sekundärseitenwicklung an die Batterie freizugeben.

5. Ausgleichsschaltung nach einem der vorhergehenden Ansprüche, wobei die Steuerung speziell zu Folgendem konfiguriert ist:
während des Ladens der Zielbatterie, falls eine Spannung der ersten Sammelschiene kleiner als eine Spannung der zweiten Sammelschiene ist, Steuern der dritten Leistungsröhre und der vierten Leistungsröhre, um geöffnet zu sein, und der zweiten Leistungsröhre, um geschlossen zu sein, Einstellen der ersten Leistungsröhre in einen Gleichrichtungszustand und Steuern des ersten Steuerschalters, um geöffnet zu sein, um elektrische Energie, die in der Erregerinduktanz der Primärseitenwicklung gespeichert ist, über die erste Sekundärseitenwicklung an die Batterie freizugeben.

6. Ausgleichsschaltung nach einem der vorhergehenden Ansprüche, wobei die Steuerung speziell zu Folgendem konfiguriert ist:
während des Entladens der Zielbatterie, falls eine Spannung der ersten Sammelschiene größer als eine Spannung der zweiten Sammelschiene ist, Steuern der dritten Leistungsröhre und der vierten Leistungsröhre, um geöffnet zu sein, und der zweiten Leistungsröhre, um geschlossen zu sein, Einstellen der ersten Leistungsröhre in einen Gleichrichtungszustand und Steuern des ersten Steuerschalters, um geschlossen zu sein, um elektrische Energie in der Erregerinduktanz der Primärseitenwicklung zu speichern.

7. Ausgleichsschaltung nach einem der vorhergehenden Ansprüche, wobei die Steuerung speziell zu Folgendem konfiguriert ist:
während des Entladens der Zielbatterie, falls eine Spannung der ersten Sammelschiene kleiner als eine Spannung der zweiten Sammelschiene ist, Steuern der ersten Leistungsröhre und der zweiten Leistungsröhre, um geöffnet zu sein, und der dritten Leistungsröhre, um geschlossen zu sein, Einstellen der ersten Steuerschalters in einen Gleichrichtungszustand und Steuern der vierten Leistungsröhre, um geschlossen zu sein, um elektrische Energie in der Erregerinduktanz der Primärseitenwicklung zu speichern.

8. Ausgleichsschaltung nach einem der vorhergehenden Ansprüche, wobei jeder Batteriesteuerschalter in den N Batteriesteuerschaltern ein gepaarter MOS-Transistor ist und der gepaarte MOS-Transistor eine erste Schaltröhre (501) und eine zweite Schaltröhre (502) umfasst; und
eine Source der ersten Schaltröhre mit einer Source der zweiten Schaltröhre verbunden ist, Gates der ersten Schaltröhre und der zweiten Schaltröhre mit der Steuerung verbunden sind, ein Drain der ersten Schaltröhre mit der Batterie verbunden ist und ein Drain der zweiten Schaltröhre mit der entsprechenden ersten Sammelschiene und der entsprechenden zweiten Sammelschiene verbunden ist.

9. Ausgleichsverfahren elektrischer Batterieenergie, das auf die Ausgleichsschaltung elektrischer Batterieenergie nach einem der Ansprüche 1 bis 8 angewandt wird, wobei das Verfahren Folgendes umfasst:
Steuern eines Batteriesteuerschalters, der mit der Zielbatterie verbunden ist, um geschlossen zu sein, um einen Spannungswert der Zielbatterie zu erlangen, der durch die Abtasteinheit detektiert wird; oder Steuern der Ausgleichseinheit, um die Zielbatterie zu laden/entladen.

10. Verfahren nach Anspruch 9, wobei das Verfahren ferner Folgendes umfasst:
Steuern des Batteriesteuerschalters, der mit der Zielbatterie verbunden ist, um geschlossen zu sein, und Steuern des zweiten Steuerschalters, um geöffnet zu sein, um den Spannungswert der Zielbatterie zu erlangen, der durch die Abtasteinheit detektiert wird; oder Steuern des Batteriesteuerschalters, der mit der Zielbatterie verbunden ist, um geschlossen zu sein, und Steuern des zweiten Steuerschalters, um geschlossen zu sein, um die Ausgleichseinheit zu steuern, um die Zielbatterie zu laden/entladen.

11. Verfahren nach Anspruch 9 oder 10, wobei das Steuern der Ausgleichseinheit, um die Zielbatterie zu laden/entladen, Folgendes umfasst:
wenn detektiert wird, dass eine Spannungsdifferenz zwischen einer ersten Zielbatterie und einer zweiten Zielbatterie größer als ein definierter Spannungsschwellenwert ist, wobei die erste Zielbatterie und die zweite Zielbatterie zwei beliebige Batterien in dem Reihenbatteriepack sind, der die N Batterien umfasst, die in Reihe geschaltet sind, und ein Spannungswert der ersten Zielbatterie kleiner als ein Spannungswert der zweiten Zielbatterie ist,
Steuern eines Batteriesteuerschalters, der mit der ersten Zielbatterie verbunden ist, um geschlossen zu sein, Steuern der Ausgleichseinheit, um die erste Zielbatterie zu laden, und
Steuern eines Batteriesteuerschalters, der mit der zweiten Zielbatterie verbunden ist, um geschlossen zu sein, um die Ausgleichseinheit zu steuern, um die zweite Zielbatterie zu entladen.

12. Energiespeichersystem, umfassend: mindestens eine Energiespeichereinheit und mindestens eine Umwandlungseinheit in einer Eins-zu-Eins-Entsprechung mit der mindestens einen Energiespeichereinheit, wobei jede Umwandlungseinheit in der mindestens einen Umwandlungseinheit mit einem Leistungsnetz verbunden ist und jede Energiespeichereinheit in der mindestens einen Energiespeichereinheit einen Reihenbatteriepack umfasst, der N Batterien, die in Reihe geschaltet sind, und die Ausgleichsschaltung elektrischer Batterieenergie nach einem der Ansprüche 1 bis 8 umfasst;
jede Energiespeichereinheit in der mindestens einen Energiespeichereinheit zu Folgendem konfiguriert ist: Ausgeben eines Gleichstroms an eine entsprechende Umwandlungseinheit oder Empfangen eines Gleichstroms, der durch eine entsprechende Umwandlungseinheit eingegeben wird, und Laden des Reihenbatteriepacks, der die N Batterien umfasst, die in Reihe geschaltet sind; und
jede Umwandlungseinheit in der mindestens einen Umwandlungseinheit zu Folgendem konfiguriert ist: Umwandeln eines Gleichstroms, der durch eine entsprechende Energiespeichereinheit eingegeben wird, in einen Wechselstrom und Ausgeben desselben an das Leistungsnetz; oder Empfangen eines Wechselstroms, der durch das Leistungsnetz eingegeben wird, Umwandeln des Wechselstroms in einen Gleichstrom und Ausgeben desselben an eine entsprechende Energiespeichereinheit.

## Revendications

1. Circuit d'équilibrage d'énergie électrique de batterie (200), appliqué à un bloc-batterie en série (201) comprenant N batteries connectées en série, dans lequel le circuit comprend : un dispositif de commande (202), N commutateurs de commande de batterie (203), une unité de commande de condensateur de filtrage (204), une unité d'équilibrage (205) et une unité d'échantillonnage (206) ;
chaque batterie parmi les N batteries est connectée à une première extrémité de chaque commutateur de commande de batterie parmi les N commutateurs de commande de batterie selon une correspondance biunivoque, et une seconde extrémité de chaque commutateur de commande de batterie parmi les N commutateurs de commande de batterie est connectée à l'unité de commande de condensateur de filtrage ; l'unité de commande de condensateur de filtrage est connectée à l'unité d'équilibrage et à l'unité d'échantillonnage ; et l'unité d'équilibrage est connectée à une alimentation (207), et l'alimentation est configurée pour alimenter l'unité d'équilibrage ;
l'unité d'équilibrage est configurée pour charger/décharger une batterie cible, dans lequel la batterie cible est une batterie quelconque des N batteries ;
l'unité d'échantillonnage est configurée pour détecter une tension de la batterie cible ;
l'unité de commande de condensateur de filtrage est configurée pour filtrer un courant d'entrée fourni par l'unité d'équilibrage à la batterie cible ; et
le dispositif de commande est configuré pour commander la fermeture d'un commutateur de commande de batterie connecté à la batterie cible, pour obtenir une valeur de tension de la batterie cible détectée par l'unité d'échantillonnage ; ou pour commander l'unité d'équilibrage pour charger/décharger la batterie cible ;
dans lequel le circuit d'équilibrage d'énergie électrique de batterie comprend en outre une première barre omnibus (208) et une seconde barre omnibus (209), et les N batteries comprennent une pluralité de premières batteries et une pluralité de secondes batteries ;
l'unité d'équilibrage comprend un enroulement côté primaire (2051), un premier enroulement côté secondaire (2052), un second enroulement côté secondaire (2053) et un premier commutateur de commande (2054) ;
l'unité d'échantillonnage comprend un convertisseur analogique-numérique, CAN, (2061) et un circuit d'échantillonnage (2062) ; une seconde extrémité d'un premier commutateur de commande de batterie des N commutateurs de commande de batterie connectés à une première batterie de la pluralité de premières batteries est connectée à la première barre omnibus, et une seconde extrémité d'un second commutateur de commande de batterie des N commutateurs de commande de batterie connectés à une première batterie de la pluralité de secondes batteries est connectée à la seconde barre omnibus ;
la première barre omnibus est connectée à une première extrémité de l'unité de commande de condensateur de filtrage, et la seconde barre omnibus est connectée à une seconde extrémité de l'unité de commande de condensateur de filtrage ;
la première barre omnibus est connectée au premier enroulement côté secondaire, et la seconde barre omnibus est connectée au second enroulement côté secondaire ;
l'enroulement côté primaire est connecté à l'alimentation et l'enroulement côté primaire est mis à la masse par l'intermédiaire du premier commutateur de commande ; et
la première barre omnibus est connectée à une première extrémité d'entrée du circuit d'échantillonnage, la seconde barre omnibus est connectée à une seconde extrémité d'entrée du circuit d'échantillonnage, une extrémité de sortie du circuit d'échantillonnage est connectée au CAN, et une extrémité de sortie du CAN est connectée au dispositif de commande ; **caractérisé en ce que**
l'unité d'équilibrage comprend en outre un premier tube d'alimentation (601), un deuxième tube d'alimentation (602), un troisième tube d'alimentation (603) et un quatrième tube d'alimentation (604) ;
une première extrémité du premier tube d'alimentation est connectée à une borne pointillée du premier enroulement côté secondaire, une seconde extrémité du premier tube d'alimentation est connectée à la première barre omnibus, une première extrémité du deuxième tube d'alimentation est connectée à une borne non pointillée du premier enroulement côté secondaire, une seconde extrémité du deuxième tube d'alimentation est connectée à la seconde barre omnibus, une première extrémité du troisième tube d'alimentation est connectée à une borne non pointillée du second enroulement côté secondaire, une seconde extrémité du troisième tube d'alimentation est connectée à la première barre omnibus, une première extrémité du quatrième tube d'alimentation est connectée à une borne pointillée du second enroulement côté secondaire, et une seconde extrémité du quatrième tube d'alimentation est connectée à la seconde barre omnibus ; et l'alimentation est connectée à une borne pointillée de l'enroulement côté primaire, et une borne non pointillée de l'enroulement côté primaire est mise à la masse par l'intermédiaire du premier commutateur de commande.

2. Circuit d'équilibrage selon la revendication 1, dans lequel l'unité de commande de condensateur de filtrage comprend spécifiquement un condensateur de filtrage et un second commutateur de commande, le second commutateur de commande et le condensateur de filtrage sont connectés en série ; et
le dispositif de commande est spécifiquement configuré pour commander la fermeture du commutateur de commande de batterie connecté à la batterie cible et pour commander l'ouverture du second commutateur de commande, pour obtenir la valeur de tension de la batterie cible détectée par l'unité d'échantillonnage ; ou pour commander la fermeture du commutateur de commande de batterie connecté à la batterie cible et pour commander la fermeture du second commutateur de commande, pour commander l'unité d'équilibrage pour charger/décharger la batterie cible.

3. Circuit d'équilibrage selon l'une quelconque des revendications 1 et 2, dans lequel le dispositif de commande est spécifiquement configuré pour :
lorsqu'il est détecté qu'une différence de tension entre une première batterie cible et une seconde batterie cible est supérieure à un seuil de tension spécifié, dans lequel la première batterie cible et la seconde batterie cible sont deux batteries quelconques dans le bloc-batterie en série comprenant les N batteries connectées en série, et qu'une valeur de tension de la première batterie cible est inférieure à une valeur de tension de la seconde batterie cible,
commander la fermeture d'un commutateur de commande de batterie connecté à la première batterie cible, pour commander l'unité d'équilibrage pour charger la première batterie cible, et
commander la fermeture d'un commutateur de commande de batterie connecté à la seconde batterie cible, pour commander l'unité d'équilibrage pour décharger la seconde batterie cible.

4. Circuit d'équilibrage selon une quelconque revendication précédente, dans lequel le dispositif de commande est spécifiquement configuré pour :
lors de la charge de la batterie cible, si une tension de la première barre omnibus est supérieure à une tension de la seconde barre omnibus, commander l'ouverture du premier tube d'alimentation et du deuxième tube d'alimentation et la fermeture du troisième tube d'alimentation, définir le quatrième tube d'alimentation sur un état de redressement, et commander l'ouverture du premier commutateur de commande, pour libérer l'énergie électrique stockée dans l'inductance d'excitation de l'enroulement côté primaire vers la batterie par l'intermédiaire du second enroulement côté secondaire.

5. Circuit d'équilibrage selon une quelconque revendication précédente, dans lequel le dispositif de commande est spécifiquement configuré pour :
lors de la charge de la batterie cible, si une tension de la première barre omnibus est inférieure à une tension de la seconde barre omnibus, commander l'ouverture du troisième tube d'alimentation et du quatrième tube d'alimentation et la fermeture du deuxième tube d'alimentation, définir le premier tube d'alimentation sur un état de redressement, et commander l'ouverture du premier commutateur de commande, pour libérer l'énergie électrique stockée dans l'inductance d'excitation de l'enroulement côté primaire vers la batterie par l'intermédiaire du premier enroulement côté secondaire.

6. Circuit d'équilibrage selon une quelconque revendication précédente, dans lequel le dispositif de commande est spécifiquement configuré pour :
lors de la décharge de la batterie cible, si une tension de la première barre omnibus est supérieure à une tension de la seconde barre omnibus, commander l'ouverture du troisième tube d'alimentation et du quatrième tube d'alimentation et la fermeture du deuxième tube d'alimentation, définir le premier tube d'alimentation sur un état de redressement, et commander l'ouverture du premier commutateur de commande, pour stocker l'énergie électrique dans l'inductance d'excitation de l'enroulement côté primaire.

7. Circuit d'équilibrage selon une quelconque revendication précédente, dans lequel le dispositif de commande est spécifiquement configuré pour :
lors de la décharge de la batterie cible, si une tension de la première barre omnibus est inférieure à une tension de la seconde barre omnibus, commander l'ouverture du premier tube d'alimentation et du deuxième tube d'alimentation et la fermeture du troisième tube d'alimentation, définir le premier commutateur de commande sur un état de redressement, et commander la fermeture du quatrième tube d'alimentation, pour stocker l'énergie électrique dans l'inductance d'excitation de l'enroulement côté primaire.

8. Circuit d'équilibrage selon une quelconque revendication précédente, dans lequel chaque commutateur de commande de batterie parmi les N commutateurs de commande de batterie est un transistor MOS apparié, et le transistor MOS apparié comprend un premier tube de commutation (501) et un second tube de commutation (502) ; et
une source du premier tube de commutation est connectée à une source du second tube de commutation, des grilles du premier tube de commutation et du second tube de commutation sont connectées au dispositif de commande, un drain du premier tube de commutation est connecté à la batterie et un drain du second tube de commutation est connecté à la première barre omnibus et à la seconde barre omnibus correspondantes.

9. Procédé d'équilibrage d'énergie électrique de batterie, appliqué au circuit d'équilibrage d'énergie électrique de batterie selon l'une quelconque des revendications 1 à 8, dans lequel le procédé comprend :
la commande de la fermeture d'un commutateur de commande de batterie connecté à la batterie cible, pour obtenir une valeur de tension de la batterie cible détectée par l'unité d'échantillonnage ; ou la commande de l'unité d'équilibrage pour charger/décharger la batterie cible.

10. Procédé selon la revendication 9, dans lequel le procédé comprend en outre :
la commande de la fermeture du commutateur de commande de batterie connecté à la batterie cible et la commande de l'ouverture du second commutateur de commande, pour obtenir la valeur de tension de la batterie cible détectée par l'unité d'échantillonnage ; ou la commande de la fermeture du commutateur de commande de batterie connecté à la batterie cible et la commande de la fermeture du second commutateur de commande, pour commander l'unité d'équilibrage pour charger/décharger la batterie cible.

11. Procédé selon la revendication 9 ou 10, dans lequel la commande de l'unité d'équilibrage pour charger/décharger la batterie cible comprend :
lorsqu'il est détecté qu'une différence de tension entre une première batterie cible et une seconde batterie cible est supérieure à un seuil de tension spécifié, dans lequel la première batterie cible et la seconde batterie cible sont deux batteries quelconques dans le bloc-batterie en série comprenant les N batteries connectées en série, et qu'une valeur de tension de la première batterie cible est inférieure à une valeur de tension de la seconde batterie cible,
commander la fermeture d'un commutateur de commande de batterie connecté à la première batterie cible, pour commander l'unité d'équilibrage pour charger la première batterie cible, et
commander la fermeture d'un commutateur de commande de batterie connecté à la seconde batterie cible, pour commander l'unité d'équilibrage pour décharger la seconde batterie cible.

12. Système de stockage d'énergie, comprenant : au moins une unité de stockage d'énergie et au moins une unité de conversion en correspondance biunivoque avec l'au moins une unité de stockage d'énergie, dans lequel chaque unité de conversion parmi l'au moins une unité de conversion est connectée à une grille d'alimentation, et chaque unité de stockage d'énergie parmi l'au moins une unité de stockage d'énergie comprend un bloc-batterie en série comprenant N batteries connectées en série et le circuit d'équilibrage d'énergie électrique de batterie selon l'une quelconque des revendications 1 à 8 ;
chaque unité de stockage d'énergie parmi l'au moins une unité de stockage d'énergie est configurée pour : délivrer en sortie un courant continu à une unité de conversion correspondante, ou recevoir un courant continu d'entrée fourni par une unité de conversion correspondante et charger le bloc-batterie en série comprenant les N batteries connectées en série ; et
chaque unité de conversion parmi l'au moins une unité de conversion est configurée pour : convertir un courant continu d'entrée fourni par une unité de stockage d'énergie correspondante en un courant alternatif et le délivrer en sortie à une grille d'alimentation ; ou recevoir un courant alternatif d'entrée fourni par la grille d'alimentation, convertir le courant alternatif en un courant continu et le délivrer en sortie à une unité de stockage d'énergie correspondante.
